# EUROPÄISCHE PATENTSCHRIFT

(11) **EP 0 469 457 B1**
(45) Veröffentlichungstag und Bekanntmachung des Hinweises auf die Patenterteilung: **02.08.1995**
(21) Anmeldenummer: 91112461.8
(22) Anmeldetag: 25.07.1991
(51) Int. Cl.: H02G 3/04, H01R 4/64

(54) **Rastklammer für einen Elektroinstallations-Wandkanal**
Locking clamp for the wall trunking of an electrical installation
Pince de blocage pour une canalisation murale d'installation électrique

(30) Priorität: 31.07.1990 DE 4024293
(43) Veröffentlichungstag der Anmeldung: 05.02.1992
(73) Patentinhaber: Albert Ackermann GmbH & Co. KG, 51643 Gummersbach (DE)
(72) Erfinder: Knier, Günther G., W-5270 Gummersbach (DE)
(74) Vertreter: Wilhelm & Dauster Patentanwälte European Patent Attorneys

(56) Entgegenhaltungen:
- DE-A- 2 203 946
- DE-U- 7 701 100
- DE-U- 8 704 502

## Beschreibung

### Rastklammer für einen Elektroinstallations-Wandkanal

Die Erfindung betrifft eine Rastklammer für einen elektrische Installationseinrichtungen aufnehmenden Wandkanal nach dem Oberbegriff des Patentanspruches 1.

Bei einem derartigen Wandkanal werden die elektrischen Installationseinrichtungen in dem Unterteil gehaltert, welches an einem festen Unterbau, beispielsweise einer Zimmerwand, angebracht ist. Um im Montage- oder Reparaturfall die Zugänglichkeit zu ermöglichen, ist das Unterteil nicht geschlossen ausgeführt, sondern weist eine Öffnung auf, die durch ein im wesentlichen bündig abschließendes Abdeckteil geschlossen wird. Vorzugsweise ist das Unterteil im Querschnitt C-förmig mit einer frontseitigen Längsöffnung gestaltet.

Zur Halterung des Abdeckteils greifen die dort vorgesehenen Einschubansätze in den rinnenartig geformten Öffnungsrand des Unterteils ein und werden dort rastend gehalten.

Da Unter- und Abdeckteil metallisch ausgeführt sind, müssen beide in die allgemeinen elektrischen Schutzmaßnahmen einbezogen werden. Da das Abdeckteil von Zeit zu Zeit abgenommen werden muß, beispielsweise zur Montage weiterer Installationseinrichtungen, ist es ungünstig, einen Schutzleiter an diesem Teil selbst zu befestigen. Um dies zu vermeiden, ist es aus dem DE-GM 87 04 502 bekannt, das Abdeckteil mittels einer Rastklammer am Unterteil zu halten, welche gleichzeitig die beiden Teile elektrisch verbinden soll. Die Rastklammer ist dort am Unterteil festlegbar und drückt nach dem Einschieben des Abdeckteils mittels wenigstens einer Kontaktfahne elastisch gegen eine Rinnenwandung des Öffnungsrandes des Unterteils. Die Kontaktfahne besteht dort aus einer einzelnen, als Schneide ausgebildeten Kontaktspitze, über die die elektrische Verbindung von Abdeckteil und Unterteil erfolgen soll. Die Kontaktschneidspitze ist dazu vorgesehen, am Unterteil aufgebrachte isolierende Farbschichten oder Lackierungen aufzuritzen und so eine elektrische Verbindung überhaupt erst zu ermöglichen.

Es zeigt sich jedoch, daß die bekannte Rastklammer nicht in jedem Fall eine zuverlässige elektrische Verbindung herstellt. Zum einen bringt die praktisch nur an einem Punkt der Kontaktfahne erfolgende Kontaktierung eine Unsicherheit hinsichtlich der elektrischen Verbindung schon aus fertigungstechnischen Gründen mit sich, beispielsweise aufgrund einer nicht exakten Bildung der Schneidspitze oder einem isolierenden Materialfehler an dieser Stelle. Diese Unsicherheit ließe sich bei dem bekannten Wandkanal nur durch Einsatz einer größeren Anzahl von Rastklammern verhindern. Ein weiteres Problem, das auch durch eine größere Anzahl von Rastklammern nicht bewältigbar ist, besteht darin, daß die an der Kontaktfahne vorgesehene Schneidspitze nicht in jedem Fall gleichzeitig ein zuverlässiges Aufritzen der Isolierschicht und anschließendes Kontaktieren gewährleistet. Dies ist zwar möglich für vergleichsweise weiche und relativ dünne Isolierschichten in Form von dünnen Anstrichen oder Kunststoffolien, Schwierigkeiten treten dagegen bei dicken und/oder harten Oberflächenschutzschichten, wie zum Beispiel anodischen Oxidschichten, auf. Die Isolierschicht wird dann entweder gar nicht mehr bis zur Metallgrundfläche hin durchgeritzt, oder aber das durch das Ritzen an der Kontaktspitze aufgestaute isolierende Material führt dazu, daß die Kontaktspitze nach dem Ritzen nicht auf der Metallgrundfläche aufliegt.

Aus der DE-AS 22 03 946 ist eine U-förmige Kontaktklemme mit zwei federnden Schenkeln zur Erdung des metallischen Schirmes eines Fernmeldekabels bekannt, bei der mehrere Kontaktschneiden in Aufschubrichtung untereinander angeordnet sind. Diese Kontaktschneiden sind alle in der Art von zahnförmigen Widerhaken ausgebildet, die sich zur verbesserten Kontaktschneide in den Mantel des Schirmes eindrücken und ein Zurückziehen der Kontaktklemme verbinden sollen. Das Problem, Isolierschichten aufzuritzen, tritt bei solchen Kontaktklemmen nicht auf.

Aufgabe der Erfindung ist es, eine Rastklammer zu schaffen, mit der neben einer rastbaren Halterung eine zuverlässige elektrische Verbindung von Abdeck- und Unterteil des Wandkanals auch in den Fällen, in denen diese Teile mit harten, isolierenden Schutzschichten versehen sind, gewährleistet ist.

Gelöst wird diese Aufgabe für eine Rastklammer der eingangs genannten Art durch die kennzeichnenden Merkmale des Patentanspruchs 1.

Die so gestaltete Kontaktfahne stellt grundsätzlich zwei oder mehr Kontaktpunkte zur Verfügung, wodurch die Wahrscheinlichkeit einer nicht erfolgenden Kontaktierung aufgrund von Fertigungsfehlern deutlich herabgesetzt ist. Mit der oder den der vorderen Kontaktschneide in Einschubrichtung nachfolgenden abgerundeten Kontaktschneiden, die mit einer größeren Fläche anliegen können, erfolgt eine sichere Kontaktierung über die nachfolgenden Schneiden auch in dem Fall, wo die vordere Kontaktschneide die Oberfläche zwar aufgeritzt hat, jedoch durch das dadurch aufgestaute Material bei beendetem Aufsteckvorgang nicht mehr am Metallgrundkörper anliegt. Da die vordere Kontaktschneide die Isolierschicht bereits zum größten Teil aufgeritzt hat, ist der Spanabhub der nachfolgenden Kontaktschneiden geringer und ein die Kontaktierung blockierender Materialstau weitgehend ausgeschlossen. Schließlich ermöglichen die in Einschubrichtung hintereinander liegenden Kontaktschneiden auch das zuverlässige Aufritzen harter Isolierschichten, wie zum Beispiel anodischer Oxidschichten. Hat die vordere Kontaktschneide die Isolierschicht noch nicht in der ganzen Tiefe aufgeritzt, so erfolgt dies jedenfalls durch eine in derselben Schneidspur nachritzenden weiteren Kontaktschneide. Da bei den hinteren Kontaktschneiden nur noch ein geringer Materialabhub erfolgt, ergeben sich wenigstens bei diesen Schneiden keine mit großem Materialabhub zusammenhängenden Kontaktierungsprobleme. Insgesamt verbessert die so gestaltete Rastklammer die Sicherheit hinsichtlich der elektrischen Verbindung von Abdeck- und Unterteil des Wandkanals ganz beträchtlich.

Die nachfolgenden, mit abgerundeten Zähnen versehenen Kontaktschneiden dienen hauptsächlich zur elektrischen Verbindung mit der durch das Aufritzen mit der vordersten Kontaktschneide bereits weitgehend freigelegten Metallgrundfläche.

Die Verbindungslinie der Kontaktschneidspitzen ist vorteilhafterweise an die Form der Andrückfläche angepaßt, so daß bei eingeschobenem Abdeckteil zur Gewährleistung der Halterung und elektrischen Verbindung des Abdeckteils mit dem Unterteil alle Kontaktschneiden in Kontakt mit der Andrückfläche sind.

Für eine noch weitergehendere Kontaktiersicherheit kann die Rastklammer mit mehreren im Abstand voneinander quer zur Einschubrichtung parallel angeordneten Kontaktfahnen versehen sein.

In weiterer Ausgestaltung der Erfindung ist die Rastklammer mit Fortsätzen versehen, mit denen sie an einem geradlinigen, im Abstand und parallel zu den Rinnenwänden einsteckbaren Einschubansatz festklemmbar ist. Vorzugsweise ist hierzu ein Fortsatz, der das Ende eines den Einschubansatz hintergreifenden Klammerschenkels bildet, in einer Aufnehmung dieses Ansatzes gehalten, während der andere Fortsatz als Gegenstütze gestaltet ist.

Alternativ zur Festlegung der Rastklammer am Abdeckteil kann auch vorgesehen sein, die Rastklammer mit geeigneten Fortsätzen so zu gestalten, daß sie in der Rinne des Wandkanalunterteils, und zwar vorzugsweise auf dem Rinnenboden festlegbar ist.

In Weiterbildung der Erfindung ist bei einer auf dem Rinnenboden mit einer Grundfläche festklemmbaren Rastklammer vorgesehen, die Kontaktfahne in etwa senkrecht zur Grundfläche verlaufend anzubringen. So kann sie elastisch gegen einen im wesentlichen parallel zu den Rinnenwandungen einsteckbaren Einschubansatz des Abdeckteils andrücken. Hierzu ist es auch möglich, zwei derartige Kontaktfahnen im wesentlichen senkrecht zur Rastklammergrundfläche gegeneinander gerichtet im Abstand anzuordnen, so daß ein geradliniger, parallel zu den Rinnenwandungen verlaufender Einschubansatz zwischen die beiden Kontaktfahnen aufgenommen wird.

Vorteilhaft ist es des weiteren, wenn der vordersten Kontaktschneide eine Keilfläche in Einschubrichtung vorgelagert ist, mit der sich die Einschubbewegung erleichtern läßt. Zudem ist es möglich, diese Keilfläche als die flacher abfallende Flanke einer sägezahnartigen, vorderen Kontaktschneide vorzusehen, wodurch zusätzlich die Aufritz- und Halterungsfunktion der Kontaktfahne unterstützt wird. Während sich die so geformte Sägezahnschneide mit ihrer flachen Flanke verhältnismäßig leicht einschieben läßt, stellt sie einer entgegengerichteten Lösebewegung einen erwünscht großen Widerstand entgegen, solange die Rastklammer nicht absichtlich zusammengedrückt wird, um das Entfernen des Abdeckteils zu ermöglichen.

Bevorzugte Ausführungsformen der Erfindung sind in den Zeichnungen dargestellt und werden nachfolgend beschrieben. Es zeigen:
- Fig. 1: eine Rastklammer in Seitenansicht mit einer drei Kontaktschneiden aufweisenden Kontaktfahne,
- Fig. 2: eine Draufsicht auf die Rastklammer der Fig. 1,
- Fig. 3: ein Wandkanalabdeckteil im Querschnitt mit zwei daran festgelegten Rastklammern nach Fig. 1,
- Fig. 4: das Abdeckteil der Fig. 3 mit den Rastklammern nach Fig. 1 nach Einschieben in ein Wandkanalunterteil,
- Fig. 5 und 6: Querschnitte im Rinnenbereich des Wandkanals mit einer zweiten und dritten, an Einschubansätzen des Abdeckteils festlegbaren Anordnung der Rastklammer,
- Fig. 7 bis 9: wie Fig. 5 und 6, jedoch mit nunmehr am Wandkanalunterteil festlegbaren, weiteren Anordnungen der Rastklammer und
- Fig.10: wie Fig. 5 bis 9, jedoch mit einer mit gegeneinander gerichteten Kontaktfahnen versehenen Rastklammer.

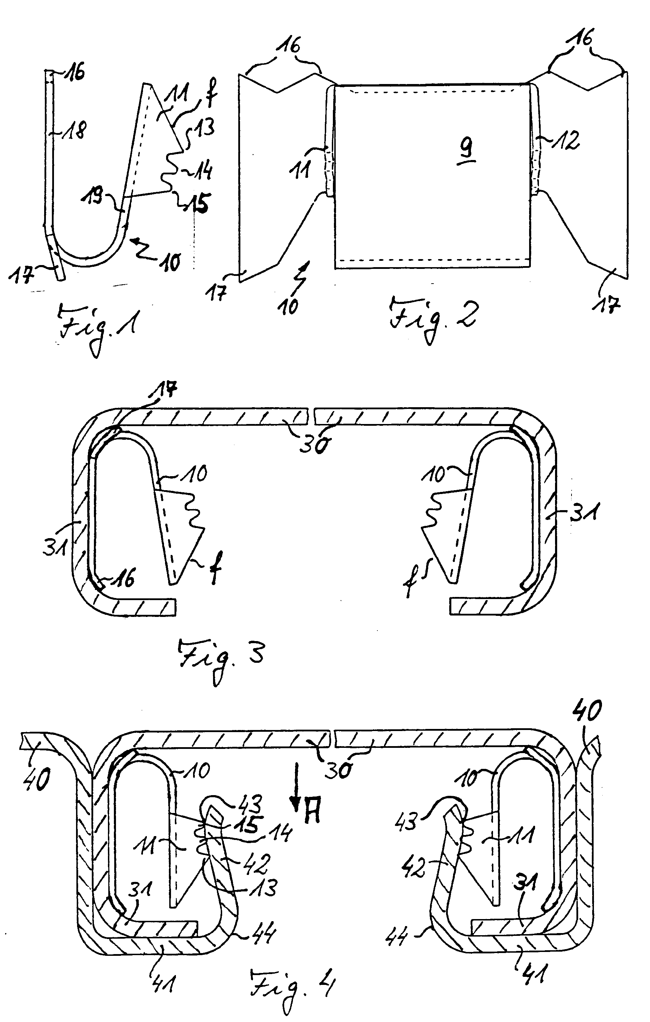

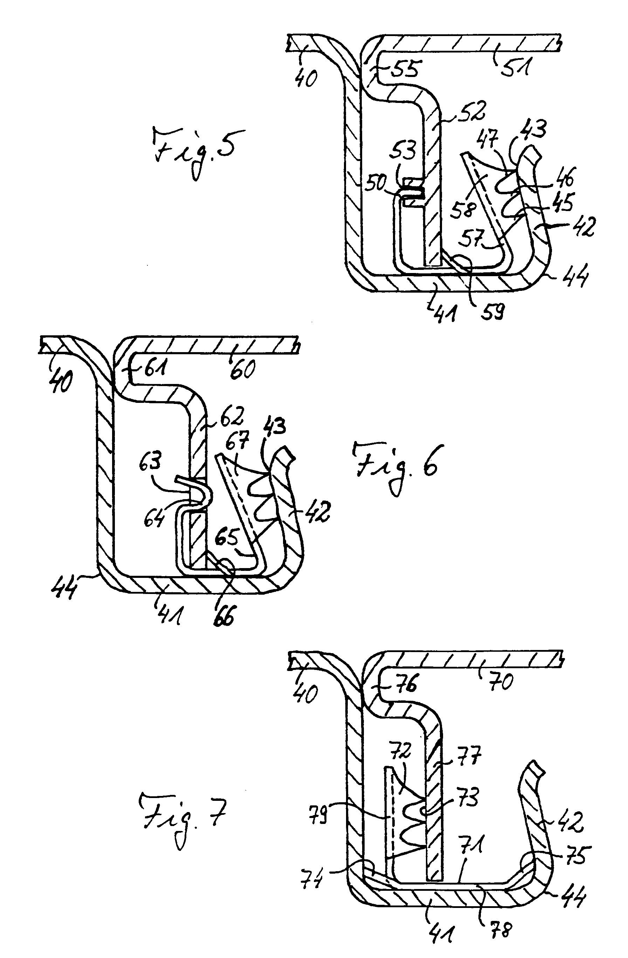

Eine in den Fig. 1 und 2 dargestellte Rastklammer (10) besitzt einen U-förmig gebogenen, zwei Klammerschenkel (18, 19) bildenden Mittelkörper (9). Der eine Klammerschenkel (18) ist über den Bereich des Mittelkörpers hinaus durch seitliche Fortsätze verlängert, an denen Klemmspitzen (16, 17) angeformt sind. An den Seiten des anderen Klammerschenkels (19) ist jeweils eine Kontaktfahne (11, 12) angeformt. Die Kontaktfahnen erstrecken sich nach außen in der dem Klammerschenkel (18) abgewandten Richtung und enden in drei Kontaktschneiden (13, 14, 15). Dabei ist eine erste Kontaktschneide (13) sägezahnartig ausgebildet, während die nachfolgenden Kontaktschneiden (14 und 15) abgerundete Zähne aufweisen. Die Verbindungslinie vom Ende des Klammerschenkels (19) zur Schneide (13) bildet eine flacher ansteigende Flanke (f) dieser Sägezahnschneide (13).

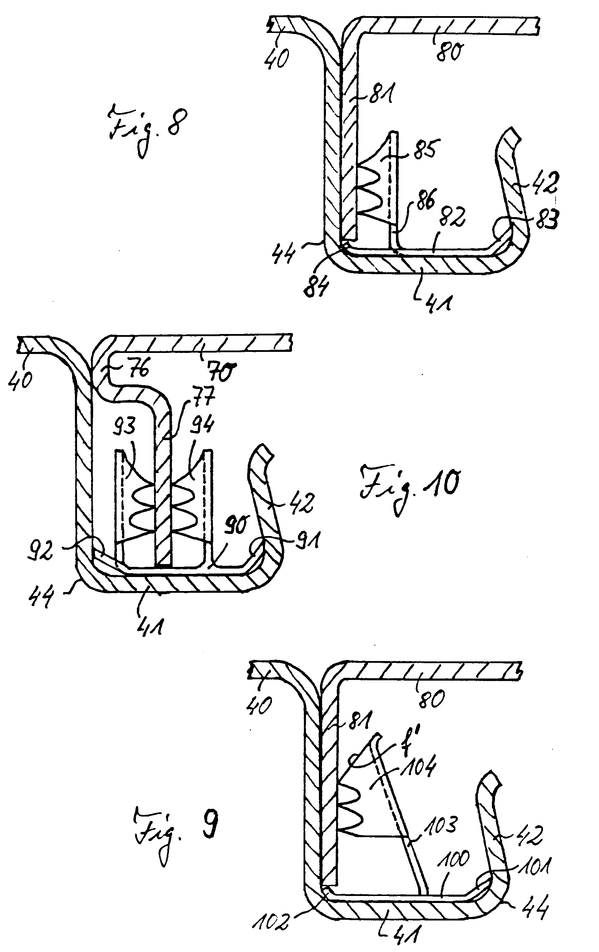

Die obige Rastklammer (10) ist gemäß Fig. 3 in Einschubansätzen (31) eines Wandkanalabdeckteils (30) festlegbar, wozu sich die Klemmspitzen (16, 17) der Rastklammer (10) gegen die Ecken des Einschubansatzes (31) verspannen. Das Abdeckteil (30) besitzt einen C-förmigen Querschnitt, wobei an beiden Enden symmetrisch die L-förmigen Einschubansätze (31) vorgesehen sind, in die jeweils eine Rastklammer (10) eingesetzt ist. Der die eigentliche Abdeckfläche bildende, die beiden Einschubansätze (31) verbindende Mittelteil des Abdeckteils (30) ist in den Fig. 3 und 4 wie angedeutet stark verkürzt dargestellt.

Fig. 4 zeigt das mit den Rastklammern (10) versehene Abdeckteil (30) nach Einschieben in Richtung (A) an einer offenen Seite eines Wandkanalunterteils (40). Das Unterteil (40) bildet in bekannter und nicht gezeigter Weise einen Hohlraum zur Aufnahme elektrischer Installationseinrichtungen, für deren Montage es einseitig offen geformt ist. Der Öffnungsrand ist in Form von längs verlaufenden Rinnen (44) gebildet, in die passend die Einschubansätze (31) des Abdeckteils (30) eingreifen. Nach Einrasten des Abdeckteils (30) bildet dessen Mittelabschnitt zwischen den Einschubansätzen (31) zusammen mit der nur andeutungsweise gezeigten, jeweils an die Rinnen (44) anschließenden Außenfläche des Wandkanalunterteils (40) eine im wesentlichen bündige Wandkanalaußenfläche. Die einander gegenüberliegenden Wandungen (42) der Rinne (44) sind jeweils leicht nach innen gebogen ausgeführt. Beim Einschieben des Abdeckteils (30) gleitet dadurch zunächst die Keilfläche (f) der Rastklammer (10) an der Innenfläche (43) der gebogenen Wandung (42) entlang und biegt diese nach außen. Zusammen mit der elastischen Ausführung der U-förmigen Rastklammer bewirkt dies ein Gegendrücken der Kontaktfahne (11) gegen die Innenfläche (43) der Rinnenwandung (42). Die so aufgebaute Druckkraft bewirkt nun beim weiteren Einschieben des Abdeckteils (30), daß die Kontaktschneiden (13, 14, 15) der Rastklammer (10) an der Innenfläche (43) entlangfahren und eine dort eventuell vorhandene isolierende Oberflächenschicht aufritzen. Die hauptsächliche Schneidfunktion geht dabei von der in Einschubrichtung vordersten, als Sägezahn ausgebildeten Kontaktschneide (13) aus. Die nachfolgenden Schneiden (14 und 15) schneiden ggf. bei unvollständigem Aufritzen durch die erste Schneide (13) nach und gewährleisten vor allem eine sichere elektrische Verbindung zwischen Abdeckteil (30) und Unterteil (40). Diese erfolgt also vom Abdeckteil (30) über die Klemmspitzen (16, 17), die metallische Rastklammer (10), die Kontaktschneiden (13 bis 15) bis zur metallischen Grundschicht an der Innenseite (43) der Rinne (44) und so schließlich zum Unterteil (40).

Auch bei einer Blockierung des Kontaktes der ersten Kontaktschneide (13), beispielsweise aufgrund angestauten Abhubmaterials beim Ritzen der Isolierschicht gewährleisten die nachfolgenden Kontaktschneiden (14 und 15) eine zuverlässige elektrische Verbindung. Mit jeder Rastklammer (10) sind mit den zwei Kontaktfahnen (11, 12) und den jeweils drei Kontaktschneiden (13 bis 15) sechs Kontaktpunkte möglich. Es ist unwahrscheinlich, daß diese für die Kontaktierung sämtlich ausfallen, wozu insbesondere die Tatsache beiträgt, daß die Kontaktschneiden (13, 14, 15) an jeder Kontaktfahne (11, 12) beim Einschieben des Abdeckteils (30) alle in derselben Ritzspur an der Innenseite (43) der Rinne (44) entlangfahren.

In den Fig. 5 bis 10 ist jeweils die Rinne (44) des Öffnungsrandes des Wandkanalunterteils (40) bei eingeschobenem Abdeckteil im Querschnitt dargestellt, wobei jeweils eine andere Anordnung der Rastklammer in Funktionsstellung zur Halterung und elektrischen Verbindung von Abdeck- und Unterteil gezeigt ist. Die unterschiedlichen Anordnungen der Rastklammer sind dabei verschiedenen Formen der Einschubansätze des Abdeckteils angepaßt und zum einen Teil am Einschubansatz des Abdeckteils festgelegt (Fig. 5 und 6), zum anderen Teil auf dem Boden (41) der Rinne (44) des Unterteils (40). Die dargestellten Kontaktfahnen entsprechen nicht der erfindungsgemäßen Kombination von spitzen und abgerundeten Zähnen. Die Figuren zeigen aber weitere mögliche Anordnungen der Rastklammer.

Bei einem in Fig. 5 dargestellten Abdeckteil (51) liegt dieses nur mit einem kurzen Bogen (55) am Unterteil (40) an, wogegen der in die Rinne (44) hineinragende Einschubansatz (52) geradlinig und so nach innen versetzt gestaltet ist, daß er in etwa mittig in die Rinne (44) hineinragt. An dem geradlinigen Einschubansatz (52) ist eine Rastklammer (57) mit U-förmigem Querschnitt festgelegt. Hierzu umgreift die Rastklammer (57) den Ansatz (52) und ist mit einem umgebogenen Klammerschenkelende (50) in einer Nut (53) gehalten, die von zwei parallel im Abstand voneinander verlaufenden Vorsprüngen am Einschubansatz (52) gebildet ist. Fortsätze (59) nach Art der Klemmspitzen (16, 17) der Rastklammer (10) in Fig. 2 stehen vom Mittelteil der Rastklammer (57) schräg in Richtung des umgebogenen Klammerschenkelendes (50) derart ab, daß sie eine die Rastklammer (57) am Einschubansatz (52) festklemmende Gegenstütze zum gehaltenen Klammerschenkelende (50) bilden. Die dergestalt festgelegte Rastklammer (57) ritzt nun in der bereits beschriebenen Weise mit einer am anderen Klammerschenkel ausgeformten Kontaktfahne (58) beim Einschieben des Abdeckteils (51) an der Innenseite (43) der leicht nach innen gebogenen Rinnenwandung (42) entlang. Hierzu ist die Kontaktfahne wiederum, wie übrigens auch in allen weiteren nachfolgenden Figuren mit drei in Einschubrichtung hintereinander liegenden Kontaktschneiden (45, 46, 47) versehen. Im Unterschied zur Rastklammer (10) sind die Kontaktschneiden (45, 46, 47) nunmehr sämtlich als spitz zulaufende, sägezahnartige Schneiden gebildet. Diese Gestaltung ist in all den Fällen besonders günstig, wo auch den der vorderen Kontaktschneide (45) nachfolgenden Kontaktschneiden (46, 47) noch eine wesentliche Ritz- bzw. Schneidfunktion zukommen soll, was insbesondere zum zuverlässigen Durchdringen sehr harter Schutzschichten erwünscht ist. Im Unterschied zur Rastklammer (10) ist durch die andersartige Anordnung der Rastklammer (57) noch zu beachten, daß die nun in Einschubrichtung (A) vorderste Kontaktschneide (45) nicht dem zur Kontaktfahne (58) gehörigen Klammerschenkelende, sondern dem Schenkelbogen zugewandt ist. Die Haltefunktion für das Abdeckteil (51) wird dadurch erfüllt, daß die Rastklammer (57) mit ihrer Kontaktfahne (58) an die eine Seitenwand (42) der Rinne (44) andrückt, während der Gegendruck von dem an der gegenüberliegenden Seitenwand der Rinne (44) anliegenden Bogen (55) des Abdeckteils (51) aufgebracht wird.

Ein in Fig. 6 dargestelltes Abdeckteil (60) weist eine dem Abdeckteil (51) im wesentlichen entsprechende Form auf, nur dient hier eine Aussparung (63) an einem entsprechenden geradlinigen Einschubansatz (62), der sich an den dem Bogen (55) des Abdeckteils (51) entsprechenden Bogen (61) anschließt, zur Festlegung einer Rastklammer (65). Die Rastklammer (65) umgreift wiederum den geradlinigen Einschubansatz (62) und weist ein in die Aussparung (63) eingreifendes, U-förmig umgebogenes Klammerschenkelende (64) auf. Als Gegenstütze dient wiederum ein dem Fortsatz (59) der Rastklammer (57) entsprechender Fortsatz (66). Auch die Form einer am anderen Klammerschenkel angebrachten Kontaktfahne (67) sowie die Funktion der Rastklammer hinsichtlich Halterung und elektrischer Verbindung von Abdeckteil (60) und Unterteil (40) entspricht der in Fig. 5 gezeigten Anordnung.

Eine in Fig. 7 gezeigte Rastklammer (71) ist an der Rinne (44) des Unterteils (40) festgelegt, indem sie mit einer Grundfläche (78) auf dem Rinnenboden (41) aufliegt und sich mit beidseitigen Fortsätzen (74, 75) gegen die jeweilige Seitenwandung der Rinne (44) abstützt. Eine Kontaktfahne (72) ist an einem L-förmig von der Grundfläche (78) abgebogenen Steg (79) angeformt. Im Gegensatz zu den vorbeschriebenen Fällen drückt die Kontaktfahne (72) mit ihren Kontaktschneiden nunmehr gegen das geradlinige Ende eines Einschubansatzes (77) eines Abdeckteils (70) an, dessen Form im übrigen dem Abdeckteil (60) der Fig. 6 entspricht. Die Haltefunktion für das Abdeckteil (70) ergibt sich hier durch elastisches Gegendrücken der Kontaktfahne (72) gegen den Einschubansatz (77) und dem Anliegen des kurzen Bogens (76) des Abdeckteils (70) an der Wandung des Wandkanalunterteils (40). Die Gewährleistung der elektrischen Verbindung ergibt sich durch Entlangritzen der in der oben beschriebenen Weise mit drei spitzen Kontaktschneiden versehenen Kontaktfahne (72) an der zugewandten Seite (73) des Einschubansatzes (77). Da in Funktionsstellung der Rastklammer (71) der Steg (79) in etwa parallel zu der Seite (73) verläuft, weisen die drei sägezahnartigen Kontaktschneiden im wesentlichen dieselbe Länge auf, so daß sie alle drei zur Anlage an der Seite (73) des Einschubansatzes (77) kommen.

Bei der in Fig. 8 dargestellten Anordnung der Rastklammer ist ein Abdeckteil (80) mit einem geradlinigen, rechtwinklig abgebogenen Einschubansatz (81) vorgesehen, welcher bei eingestecktem Abdeckteil (80) ganzflächig an einer Seitenwand der Rinne (44) des Unterteils (40) anliegt. Von der anderen Seite drückt eine Rastklammer (82) mit ihrer Kontaktfahne (85) gegen den Einschubansatz (81). Die Rastklammer (82) ist in einer der Rastklammer (71) entsprechenden Weise auf dem Rinnenboden (41) mit Haltefortsätzen (83, 84) festgelegt. Ein rechtwinklig abgebogener Steg (86) trägt die Kontaktfahne (85), die in ihrer Form der Kontaktfahne (72) der Rastklammer (71) völlig entspricht. Auch die Gewährleistung der elektrischen Verbindung erfolgt analog. Die Haltefunktion ergibt sich durch das Dazwischenklemmen des Einschubansatzes (81) zwischen einer Seitenwand der Rinne (44) und den Kontaktschneiden der Kontaktfahne (85).

Für dasselbe Abdeckteil (80) mit dem geradlinig rechtwinklig abgebogenen Einschubansatz (81) zeigt die Fig. 9 eine weitere Anordnung für eine Rastklammer (100). Diese ist in bereits beschriebener Weise wiederum auf dem Rinnenboden (41) mittels Fortsätzen (101, 102) festgelegt. Von dieser am Rinnenboden (41) anliegenden Rastklammergrundfläche ragt in etwa mittig ein Steg (103) zur Senkrechten schräg geneigt ab und trägt auf der dem mit der Grundfläche gebildeten spitzen Winkel zugewandten Seite eine Kontaktfahne (104). Durch diese schräge Anordnung des Stegs (103) bzw. der Kontaktfahne (104) gegenüber dem Einschubansatz (81) läßt sich in günstiger Weise eine starke elastische Haltekraft erzeugen, wobei diese Druckkraft gleichzeitig die Aufritzfunktion der Kontaktfahne (104) begünstigt. Die vordere Sägezahnflanke (f′) erleichtert dabei wiederum das Einschieben des Abdeckteils (80). Bedingt durch die schräge Lage weist die Kontaktfahne (104) drei hintereinanderliegende Kontaktschneidzähne mit voneinander unterschiedlicher Gestalt und Länge auf, um sicherzustellen, daß alle Kontaktspitzen zur Anlage an dem Einschubansatz (81) kommen.

Bei einer weiteren Anordnung in Fig. 10 ist für das bereits zu Fig. 7 beschriebene Abdeckteil (70) zur Halterung eine Rastklammer (90) vorgesehen, die zunächst analog zur Rastklammer (71) der Fig. 7 am Rinnenboden (41) mittels Fortsätzen (91, 92) festgelegt ist. Von der am Rinnenboden (41) anliegenden Rastklammergrundfläche sind nun an zwei im wesentlichen senkrecht abstehenden, im Abstand parallel zueinander verlaufenden Stegen zwei Kontaktfahnen (93, 94) gebildet, deren zugehörige Kontaktschneiden sich in einem derartigen Abstand gegenüberliegen, daß dazwischen gerade der Einschubansatz (77) aufnehmbar ist. Das Abdeckteil (70) wird primär mit den beiden gegeneinander drückenden Kontaktfahnen (93, 94) gehalten, wohingegen dem am Unterteil (40) anliegenden Bogen (76) hier im wesentlichen nur noch Sichtschutzfunktion zukommt. Die in dieser Anordnung gezeigte Rastklammer (90) ist besonders fertigungstolerant, weil kleinere Maßabweichungen an der Rastklammer (90) oder am Einschubansatz (77) höchstens dazu führen, daß eine Kontaktfahne stärker gegen den Einschubansatz (77) drückt als die andere; dagegen ist es praktisch ausgeschlossen, daß keine der Kontaktfahnen (93, 94) mit dem Einschubansatz (77) in Kontakt kommt, wie dies bei größeren Maßabweichungen im Fall einer nur einseitig andrückenden Kontaktfahne auftreten könnte. Auch die Haltekraft ist bei dieser Anordnung im wesentlichen durch die Rastklammer (90) allein bestimmt. Maßabweichungen, die an dem doch beträchtliche Längenabmessungen aufweisenden Abdeckteil oder Unterteil (40) auftreten können, sind bei Verwendung der Rastklammer (90) in weitem Umfang unkritisch.

Wie die zahlreichen Ausführungsbeispiele und Anordnungen belegen, ist die Erfindung nicht auf eine bestimmte Form der Rastklammer festgelegt, so daß je nach Form von Wandkanalabdeck- und unterteil weitere Ausführungsformen der erfindungsgemäßen Rastklammer vorgesehen werden können. Wesentlich für die Erfindung ist stets nur die Tatsache, daß eine elastische Kontaktfahne mit mehreren, in Einschubrichtung hintereinander angeordneten, gemäß Anspruch 1 gebildeten Kontaktschneiden versehen ist, die eventuelle isolierende Oberflächenschichten zuverlässig aufritzen, beispielsweies auch sehr harte anodische Oxidschichten, so daß die Rastklammer Haltefunktion und elektrische Verbindung von Unterteil und Abdeckteil zuverlässig zu kombinieren vermag.

## Patentansprüche

1. Rastklammer (10, 57, 65, 71, 82, 90, 100) für einen elektrische Installationseinrichtungen aufnehmenden Wandkanal zur Halterung und elektrischen Verbindung eines metallischen, mit Einschubansätzen (31) versehenen Wandkanalabdeckteils (30, 51, 60, 70, 80) an einem metallischen, mit Rinnen (44) zur Aufnahme der Einschubansätze (31, 52, 62, 77, 81) versehenen Wandkanalunterteil (40), wozu die Rastklammer am einen Wandkanalteil festlegbar ist und nach dem Einschieben des Abdeckteils elastisch mittels wenigstens einer Kontaktfahne (11, 12, 58, 67, 72, 85, 93, 94, 104) gegen eine Fläche des anderen Wandkanalteils drückt, dadurch gekennzeichnet, daß die Kontaktfahne (11) mehrere, in Einschubrichtung (A) hintereinander angeordnete Kontaktschneiden (13, 14, 15) verschiedener Ausführungsarten aufweist, daß wenigstens die in Einschubrichtung (A) vorderste Kontaktschneide (13) einen spitz zulaufenden Sägezahn erster Ausführungsart bildet und daß die nachfolgenden Kontaktschneiden (14, 15) abgerundete Zähne zweiter Ausführungsart aufweisen.

2. Rastklammer nach Anspruch 1, dadurch gekennzeichnet, daß die Verbindungslinie der Spitzen der Kontaktschneiden (13, 14, 15) der Formung der Andrückfläche (43) in Einschubrichtung (A) entspricht.

3. Rastklammer nach Anspruch 1 oder 2, gekennzeichnet durch mehrere, im Abstand voneinander quer zur Einschubrichtung (A) parallel angeordnete Kontaktfahnen (11, 12).

4. Rastklammer nach einem der Ansprüche 1 bis 3 mit etwa U-förmigem Querschnitt, dadurch gekennzeichnet, daß ein Fortsatz (50, 64) als in einer Ausnehmung (53, 63) eines Einschubansatzes (52, 62) festlegbarer, den Einschubansatz (52, 62) hintergreifender Klammerschenkel gebildet ist, während der hierzu korrespondierende Fortsatz (59, 66) als vom Klammerboden (41) in Richtung des Endes (50, 64) des hintergreifenden Schenkels verlaufende Gegenstütze gestaltet ist.

5. Rastklammer nach einem der Ansprüche 1 bis 3, dadurch gekennzeichnet, daß sie Fortsätze zur klemmenden Festlegung an der Rinne (44) des Unterteils (40) aufweist.

6. Rastklammer nach Anspruch 5, dadurch gekennzeichnet, daß sie auf dem Rinnenboden (41) festlegbar ist.

7. Rastklammer nach Anspruch 5 oder 6, gekennzeichnet durch eine an eine Wandung der Rinne (44) andrückbare Grundfläche und einen davon in etwa senkrecht abstehenden Steg, an dem die gegen den Einschubansatz (73; 81; 77) drückende Kontaktfahne (72; 85, 104; 93) angeformt ist.

8. Rastklammer nach Anspruch 7, dadurch gekennzeichnet, daß die Kontaktfahne (85, 104) gegen einen an einer Rinnenwandung anliegenden Einschubansatz (81) andrückt.

9. Rastklammer nach Anspruch 7, gekennzeichnet durch zwei im Abstand voneinander parallel angeordnete, mit gegeneinander gerichteten Kontaktschneiden versehene, den Einschubansatz (77) zwischen sich aufnehmende Kontaktfahnen (93, 94).

10. Rastklammer nach einem der Ansprüche 1 bis 9, dadurch gekennzeichnet, daß der in Einschubrichtung (A) vordersten Kontkatschneide (13) eine geradlinige Keilfläche (f) vorgelagert ist.

11. Rastklammer nach Anspruch 10, dadurch gekennzeichnet, daß die Keilfläche (f) die flacher abfallende Flanke der als Sägezahn geformten Kontaktschneide (13) bildet.

## Claims

1. Holding-clip (10, 57, 65, 71, 82, 90, 100) for a wall-channel, which takes up electrical installation devices, for holding and for electrical contact of a metal wall-channel cover-member (30, 51, 60, 70, 80), provided with insert abutment members (31), onto a metal wall-channel rear member (40) which is provided with grooves (44) for uptake of insert abutment members (31, 52, 62, 77, 81), whereby a holding-clip concerned can be fixed to a wall-channel member and, after insertion of a cover member, presses flexibly against a surface of another wall-channel member, by means of at least one contact-web (11, 12, 58, 67, 72, 85, 93, 14, 104), wherein a contact-web (11) has several contact gripping points (13, 14, 15), of different design, disposed one behind another in a direction (A) of insertion, and at least a front contact gripping point (13), as seen in a direction (A) of insertion, forms a pointed sawtooth of a first design, and successive contact gripping points (14, 15) have rounded teeth of a second design.

2. Holding-clip in accordance with claim 1, wherein a line of connection of points of contact gripping points (13, 14, 15) corresponds to a form of an abutment surface (43) as seen in a direction (A) of insertion.

3. Holding-clip in accordance with claim 1 or claim 2, wherein there are several contact webs (11, 12) disposed at a distance from each other, parallel to each other, transversely in relation to a direction (A) of insertion.

4. Holding-clip in accordance with any one of claims 1 to 3 with a cross-section which is approximately U-shaped, wherein an extension (50, 64) is developed as a clip-shoulder which engages behind an insert abutment member (52, 62), which can be attached in a recess (53, 63) of a said insert abutment member (52, 62), while a corresponding projection (59, 66) is designed as a counter-support which runs from a clip-base (41) in a direction of an end (50, 64) of a clip-shoulder which engages behind.

5. Holding-clip in accordance with any one of claims 1 to 3, wherein a said holding-clip has projections for gripping attachment onto a groove (44) of a rear member (40).

6. Holding-clip in accordance with claim 5, wherein a said clip can be attached onto a base (41) of a groove.

7. Holding-clip in accordance with claim 5 or claim 6, wherein there is a base surface, which can press onto a wall of a groove (44), and a web, which is developed on a contact web which presses against an insert abutment member (73; 81; 77).

8. Holding-clip in accordance with claim 7, wherein a contact web (85, 104) presses against an insert abutment member (81) which lies on a wall of a groove.

9. Holding-clip in accordance with claim 7, wherein there are two contact webs (93, 94), disposed parallel to each other at a separation from each other, provided with contact gripping points which are directed towards each other, said contact webs taking up an insert abutment member (77) between them.

10. Holding-clip in accordance with any one of claims 1 to 9, wherein a front contact gripping point (13), as seen in a direction (A) of insertion, is supported in front by a straight wedge surface (f).

11. Holding-clip in accordance with claim 10, wherein a wedge surface (f) forms a flat, falling side of a contact gripping point (13) developed as a sawtooth.

## Revendications

1. Pince à encliquetage (10, 57, 65, 71, 82, 90, 100) destinée à une canalisation murale logeant des dispositifs d'installation électrique, pour assurer la fixation et la connexion électrique d'une pièce de couverture de canalisation murale (30, 51, 60, 70, 80), métallique et pourvue de rallonges d'insertion (31), à une partie inférieure (40) de canalisation murale, métallique, pourvue de gouttières (44) destinées à loger les rallonges d'insertion (31, 52, 62, 77, 81), ce pour quoi la pince à encliquetage peut être fixée à une partie de canalisation murale et, après insertion de la pièce de couverture, appuie d'une manière élastique, à l'aide d'au moins un drapeau de contact (11, 12, 58, 67, 72, 85, 93, 94, 104) contre une surface de l'autre partie de la canalisation murale, caractérisée en ce que le drapeau de contact (11) comporte plusieurs tranchants de contact (13, 14, 15), présentant différentes réalisations, disposés les uns derrière les autres dans le sens de l'insertion (A) ; qu'au moins le tranchant de contact (13) situé le plus en avant dans la direction de l'insertion (A) forme une dent de scie, pointue, présentant une première forme de réalisation ; et que les tranchants de contact suivants (14, 15) présentent des dents arrondies qui correspondent à une deuxième forme de réalisation.

2. Pince à encliquetage selon la revendication 1, caractérisée en ce que la ligne qui relie les pointes des tranchants de contact (13, 14, 15) correspond à la formation de la surface d'appui (43) dans la direction d'insertion (A).

3. Pince à encliquetage selon la revendication 1 ou 2, caractérisée par plusieurs drapeaux de contact (11, 12), disposés à une certaine distance les uns des autres, parallèlement les uns aux autres, perpendiculairement à la direction d'insertion (A).

4. Pince à encliquetage selon l'une des revendications 1 à 3, ayant en coupe transversale une forme approximativement en U, caractérisée en ce qu'un prolongement (50, 64) est réalisée sous forme d'une branche de pince, pouvant être fixée dans un évidement (53, 63) aménagé dans une rallonge d'insertion, et passant en arrière de la rallonge d'insertion (52, 62), tandis que le prolongement (59, 66) correspondant à ce dernier est conçu comme un contre-appui, qui court à partir du fond de pince (41) dans la direction de l'extrémité (50, 64) de la branche passant par derrière.

5. Pince à encliquetage selon l'une des revendications 1 à 3, caractérisée en ce qu'elle comporte des prolongements pour une fixation par blocage contre la gouttière (44) de la partie inférieure (40).

6. Pince à encliquetage selon la revendication 5, caractérisée en ce qu'elle peut être bloquée sur le fond de gouttière (41).

7. Pince à encliquetage selon la revendication 5 ou 6, caractérisée par une surface de base pouvant s'appuyer contre une paroi de la gouttière (44), et par une traverse, qui s'en écarte d'une manière approximativement perpendiculaire, contre laquelle est rapporté le drapeau de contact (72 ; 85, 104 ; 93) qui appuie contre la rallonge d'insertion (73 ; 81 ; 77).

8. Pince à encliquetage selon la revendication 9, caractérisée en ce que le drapeau de contact (85, 104) appuie contre une rallonge d'insertion (81) qui elle-même s'appuie contre une paroi de la gouttière.

9. Pince à encliquetage selon la revendication 7, caractérisée par deux drapeaux de contact (93, 94), disposés parallèlement l'un à l'autre et à distance l'un de l'autre, pourvus de tranchants de contact dirigés les uns contre les autres, et recevant entre eux la rallonge d'insertion (77).

10. Pince à encliquetage selon l'une des revendications 1 à 9, caractérisée en ce que le tranchant de contact (13), situé le plus en avant dans la direction de l'insertion (A), est précédé d'une surface rectiligne en coin (f).

11. Pince à encliquetage selon la revendication 10, caractérisée en ce que la surface en coin (f) forme le flanc plat dirigé vers le bas du tranchant de contact (13) formé comme une dent de scie.
